# EUROPEAN PATENT SPECIFICATION

(11) **EP 0 748 343 B1**
(45) Date of publication and mention of the grant of the patent: **14.10.1998**
(21) Application number: 95908499.7
(22) Date of filing: 16.01.1995
(51) Int. Cl.: C08G 18/08, C08G 18/10, C08G 18/36, C09D 175/04

(54) **MAR AND SCUFF RESISTANT POLYURETHANE COMPOSITION**
KRATZFESTE UND VERSCHLEISSFESTE POLYURETHANZUSAMMENSETZUNGEN
COMPOSITION DE POLYURETHANNE RESISTANTE AUX RAYURES ET A L'ABRASION

(30) Priority: 01.03.1994 US 203816
(43) Date of publication of application: 18.12.1996
(73) Proprietor: REICHHOLD CHEMICALS, INC., Durham, NC 27703 (US)
(72) Inventor: NAPLES, Gerald, Raleigh, NC 27615 (US); PETSCHKE, Glenn, H., Raleigh, NC 27613 (US); YANG, Shi, Cary, NC 28513 (US)
(74) Representative: MacDougall, Donald Carmichael
(86) International application number: US9500489
(87) International publication number: WO9523818

(56) References cited:
- EP-A- 0 017 199
- EP-A- 0 552 420
- US-A- 5 039 732

## Description

### Field of the Invention

This invention relates to polyurethane compositions, and in particular to water dispersed oil modified urethane coating compositions having improved mar and scuff resistance.

### Background of the Invention

It is generally known to those in the coatings industry that polyurethane coatings exhibit excellent abrasion resistance, flexibility, chemical resistance and durability. These coatings have found significant utility in the coating of hard surfaces such as wood floors which require highly durable coatings which should be mar and scuff resistant. Conventional oil modified urethanes are prepared in organic solvents and applied as clear or pigmented finishes. Once applied the solvent evaporates and cure of the film is achieved by air oxidation of the oil portion of the polymer. The conventional solvent borne urethanes have provided high performance floor coatings for many years but due to government regulation of volatile organic compounds (VOC) are now being restricted in certain locales. Although less polluting high solids versions of these solvent borne coatings are known, there is typically a compromise in performance, particularly dry rate and hardness.

An alternative is to use water borne water dispersible polyurethanes. The applications for these types of coatings include wood and vinyl flooring topcoats, vinyl upholstery, plastics, automotive basecoat and primers, leather finishes, fiberglass finishes, printing inks and adhesives. Water borne urethane coatings are particularly attractive as wood floor coatings or varnishes due to their abrasion resistance, fast air dry, low volatile organic content (VOC), nonflammability and easy water clean up.

Generally, water dispersible polyurethanes can be made by first reacting polyalcohols and a dihydroxy carboxylic acid with an excess of diisocyanate to form an isocyanate terminated prepolymer. This prepolymer is then made water dispersible by neutralization of the acid group with ammonia or tertiary amine to form the corresponding salt group. An alternative approach is to replace the dihydroxy carboxylic acid portion with a dihydroxy tertiary amine which would be neutralized with an acid such as hydrochloric, acetic or the like. These polymers are for the most part linear since highly crosslinked polymers form gels which are not suitable for coating applications.

For example, U.S. Patent No. 4,277,380 to Williams et al. proposes that aqueous polyurethane dispersions can be prepared by reaction of an ethylenically unsaturated fatty acid ester polyol of a drying or semi-drying fatty acid and an isocyanate terminated urethane prepolymer of a hydrocarbon diisocyanate and a dihydroxy alkanoic acid. This acid functional polymer can then be neutralized with ammonia or amines, preferably tertiary amines, and dispersed in water. Coating compositions of this type have deficiencies in that they are brittle and do not have the long term storage stability required of a trade sales varnish.

U.S. Patent Nos. 4,066,591 and 4,147,679 to Scriven et al. proposes that polyurethane-polyurea dispersions can be prepared from polyurethane prepolymers containing ethylenic unsaturation which are chain extended with diamines. These dispersions do not provide adequate performance particularly mar and scuff resistance for applications such as coatings for wood flooring.

Generally, linear polyurethane dispersions do not provide all the key features desired in a floor finish such as mar and scuff resistance. Due to the cost of these polyurethane dispersions suppliers to the floor finish industry typically add acrylic emulsions to lower the cost. This modification results in floor finishes with much poorer impact resistance. Polyfunctional aziridines can crosslink these polymers which significantly improves these properties, however, the aziridines can carry serious health risks. Carbodiimides have also been recommended as crosslinking agents for anionic polyurethane dispersions but have proven significantly less effective.

Thus there is a need for a storage stable oil modified polyurethane dispersion which produces fast air drying, high hardness, good mar, scuff, abrasion, stain and chemical resistant coatings.

### Summary of the Invention

It is an object of the present invention to provide a stable polyurethane coating composition having improved mar and scuff resistance.

It is another object of the present invention to provide a stable polyurethane composition which is air dryable, has a high hardness and is resistant to abrasions, chemicals and stains.

These and objects, features, and advantages are achieved by the polyurethane composition of the present invention. The polyurethane composition is a water dispersible oil modified urethane polymer. The urethane polymer comprises a prepolymer having isocyanate groups, acid or amine salt forming groups and ethylenic unsaturation, and an active hydrogen-containing compound having active hydrogen functionality of two or more; wherein a portion of the prepolymer is chain extended with an active hydrogen-containing compound having active hydrogen functionality of four or more.

In another embodiment, the present invention provides a mar and scuff resistant coating composition. The coating composition comprises a urethane composition dispersed in water and a promoter which promotes crosslinking by air oxidation of the ethylenic unsaturated portion of the urethane composition. The urethane composition comprises a prepolymer having isocyanate groups, acid or amine salt forming groups and ethylenic unsaturation, and an active hydrogen-containing compound having active hydrogen functionality of two or more; wherein a portion of the prepolymer is chain extended with an active hydrogen-containing compound having active hydrogen functionality of four or more.

In another embodiment, the present invention provides a method of forming a mar and scuff resistant water dispersible oil modified urethane polymer. The method comprises the steps of forming a prepolymer having isocyanate groups, acid or amine salt forming groups and ethylenic unsaturation; neutralizing the acid or amine salt of the prepolymer formed in the preceding step; dispersing the neutralized prepolymer in an aqueous medium; and chain extending the dispersed prepolymer with an active hydrogen-containing compound having active hydrogen functionality with the proviso that a portion of the chain extension is conducted with an active hydrogen-containing compound having active hydrogen functionality of four or more.

### Detailed Description of the Invention

As summarized above, the present invention provides a water dispersible oil modified urethane polymer. The urethane polymer comprises a prepolymer having isocyanate groups, acid or amine salt forming groups and ethylenic unsaturation, and an active hydrogen-containing compound having active hydrogen functionality of two or more. A portion of the prepolymer is chain extended with an active hydrogen-containing compound having active hydrogen functionality of four or more. The urethane polymer is dispersed in an aqueous medium such as water to provide a mar and scuff resistant coating composition. The coating composition is stable, has a high hardness, and is a resistant to abrasions, chemicals and stains.

Particularly suitable polyisocyanates are those corresponding to the R(NCO)ₙ formula wherein R represents a difunctional aliphatic hydrocarbon radical containing 4 to 18 carbon atoms or a difunctional cycloaliphatic hydrocarbon radical containing 5 to 15 carbon atoms. It is also possible, although not preferred, to use polyisocyanates wherein R is a difunctional aromatic hydrocarbon radical containing 6 to 40 carbon atoms or an araliphatic hydrocarbon radical containing 7 to 40 carbon atoms.

Exemplary isocyanates include 1,4-tetramethylene diisocyanate, 1,6-hexamethylene diisocyanate, 2,2,4-trimethyl-1,6-diisocyanatohexane, 1,10-decamethylene diisocyanate, 1,4-cyclohexylene diisocyanate, 4,4'-methylenebis(isocyanatocyclohexane), 1-isocyanato-3-isocyanatomethyl-3,5,5-trimethylcyclohexane, *m*- and *p*-phenylene diisocyanate, 2,6- and 2,4-tolylene diisocyanate, xylene diisocyanate, 4-chloro-1,3-phenylene diisocyanate, 4,4'-biphenylene diisocyanate, 4,4'-methylene diphenylisocyanate, 1,5-naphthylene diisocyanate, 1,5-tetrahydronaphthylene diisocyanate, and polymethylene polyphenylisocyanates. The polyisocyanates may include various other functional moieties such as ketones, esters, aldehydes, amides, halogenated hydrocarbons ethers and tertiary amines. Exemplary polyisocyanates are described in, for example, U.S. Patent Nos. 4,066,591 and 4,147,679 to Scriven et al.; 4,277,380 to Williams et al.; 4,499,233 to Tetenbaum et al.; and 4,745,151 to Noll et al.

The preferred salt forming acid groups are introduced into the prepolymer by reacting isocyanate compounds with which contain both active hydrogens and acid groups. Specific examples of compounds which contain active hydrogens and acid groups capable of salt formation are hydroxy and mercapto carboxylic acids, aminocarboxylic acids, aminohydroxy carboxylic acids, sulfonic acids, hydroxy sulfonic acids and aminosulfonic acids such as described in U.S. Patent Nos. 4,147,679 to Scriven et al. and 4,745,151 to Noll et al. A particularly suitable compound is dimethylol propionic acid. The prepolymers have an acid value of 10 to 50 at 100 solids. Suitable neutralizing agents for these acid groups include inorganic and organic bases such as sodium hydroxide, potassium hydroxide, ammonia and tertiary amines such as triethyl amine, dimethyl ethanol amine.

The preferred salt forming basic groups are introduced into the prepolymer by reacting isocyanate compounds with which contain both active hydrogens and basic groups. Specific examples of compounds which have active hydrogens and basic tertiary amino groups are aliphatic, cycloaliphatic, aromatic and heterocyclic amino alcohols, diols and triols. Examples include N,N-dimethylethanolamine, N-methyl-N-(β-hydroxyethyl)aniline, N-hydroxy-ethylpiperidine, methyl diethanolamine, cyclohexyl diethanolamine, N,N-(bishydoxyethyl)aniline, N,N-bis(hydroxyethyl)-α-aminopyridine. Other specific examples are amines, diamines, triamines and amides such as N,N-dimethyl hydrazine, N,N-dimethyl ethylenediamine, alpha-aminopyridine, N-aminopropylethylene imine and bis-(3-aminopropyl)methylamine. The prepolymers have an amine value of 10 to 50 at 100 solids. Suitable neutralizing agents for these basic groups are organic and inorganic acids such as hydrochloric acid, acetic acid, phosphoric acid, glycolic acid, lactic acid.

Ethylenic unsaturation is introduced into the prepolymer by ester polyols made by reaction of an aromatic or aliphatic polyol containing at least two hydroxyl groups per molecule and a fatty acid characterized by a portion thereof being an unsaturated fatty acid. The fatty acids are sometimes referred to as "drying" or "semi-drying" oils, particularly when in the form of an ester. An exemplary reaction is to partially esterify a polyol with an unsaturated fatty acid. Suitable polyols include low molecular weight diols, triols, and higher alcohols. Specific polyols include ethylene glycol, propylene glycol, 1,3 propane diol, 1,3-butylene glycol, 1,4 butane diol, Bisphenol A, glycerin, trimethylol propane, pentaerythritol, neopentyl glycol, and cyclohexane dimethanol. Ethylenic unsaturation may also be provided by transesterification of a drying or a semi-drying oil with an aromatic or aliphatic polyol containing at least two hydroxyl groups per molecule. Suitable drying or semi-drying oils include linseed oil, soybean oil, safflower oil, tall oil, sunflower oil, dehydrated castor oil, tung oil, sardine oil, olive oil, cottonseed oil. Suitable unsaturated fatty acids include linoleic, palmitoleic, linolenic, eleostearic, arachidonic and ricinoleic acids. The reaction of the polyol and fatty acid can be catalyzed by transesterification catalysts such as calcium naphthenate, lithium neodecanoate, zinc acetate, tin oxide and the like. A color stabilizer such as trisnonyl phenyl phosphite may also be added. Other polyols may optionally be included. Exemplary other polyols include polycarbonate, polyester, polyether, and acrylic polyols.

The term "active hydrogen containing compound" relates to a compound having hydrogens which, because of their position in the molecule, display activity according to the Zerewitinoff test. Active hydrogens include hydrogen atoms attached to oxygen, nitrogen, or sulfur, and thus useful compounds will include those having at least two of these groups (in any combination) -OH, -SH, 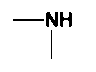 and -NH₂. The moieties attached to each group can be aliphatic, aromatic, cycloaliphatic or of a mixed type not including carbonyl, phosphonyl or sulfonyl linkages such as described in U.S. Patent No. 4,147,679 to Scriven et al.

Examples of such compounds include amines, which includes polyamines, aminoalcohols, mercapto-terminated derivatives, and alcohols, which includes polyols which are preferred because of the ease of reaction they exhibit with polyisocyanates. Alcohols and amines generally give no side reactions, giving higher yields of urethane (or urea) product with no byproduct and the products are hydrolytically stable. Also, with regard to polyols, there are a wide variety of materials available which can be selected to give a wide spectrum of desired properties. In addition, the polyols have desired reaction rates with polyisocyanates. Both saturated and unsaturated active hydrogen-containing compounds can be used, but saturated materials are preferred because of superior coating properties.

The amines which can be employed in the preparation of the urethanes of the invention can be primary or secondary diamines in which the radicals attached to the nitrogen atoms can be saturated or unsaturated, aliphatic, alicyclic, aromatic, aromatic-substituted aliphatic, aliphatic-substituted aromatic or heterocyclic. Exemplary of suitable aliphatic and alicyclic diamines are: ethylene diamine, 1,2-propylene diamine, 1,8-menthane diamine, isophorone diamine, propane-2,2-cyclohexyl amine, methane-bis-(4-cyclohexyl amine), 1,6-diaminohexane, hydrazine, and 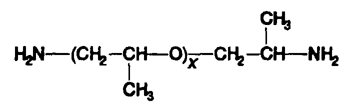 where x = 1 to 10.

Aromatic diamines such as the phenylene diamines and the toluene diamines can be employed. Exemplary of the aforesaid amines are: o-phenylene diamine and p-tolylene diamine. N-alkyl and N-aryl derivatives of the above amines can be employed such as, for example, N,N'-dimethyl-*o*-phenylene diamine, N,N'-di-*p*-toyl-*m*-phenylene diamine, and *p*-aminodiphenylamine.

Extension of the prepolymer to obtain high molecular weight polymers is achieved by reaction of the neutralized water dispersed isocyanate terminated prepolymer with an active hydrogen-containing compound having active hydrogen functionality of two or more. Typically this is provided by a diamine or a triamine. Suitable diamines include ethylene diamine, 1,2-and 1,3-diaminopropane, 1,6-diaminohexane, 1,3-diamino-2,2-dimethylpropane, isophorone diamine, 1,3- and 1,4-diaminohexane, 4,4'-diaminodicyclohexylmethane, 4,4'-diamino-3,3'-dimethyldicyclohexylmethane, 1,4-bis(2-aminoprop-2-yl)-cyclohexane, 3,3'-dimethyl-4,4'-diaminodicyclohexylmethane and mixtures of these diamines. Suitable triamines include diethylene triamine and dipropylene triamine. In order to achieve the desired mar and scuff resistance, a portion of the prepolymer must be chain extended with an active hydrogen-containing compound having active hydrogen functionality of four or more. At least 10 to 100 percent, preferably greater than 20 percent, and more preferably greater than 25 percent of the prepolymer is extended with an active hydrogen-containing compound having active functionality of four or more. Exemplary active hydrogen-containing compounds having active functionality of four or more include triethylene tetramine, tripropylene tetramine and tetraethylene pentaamine.

The prepolymer is generally prepared in the presence of a solvent for the reactants and the prepolymer product. The solvents are usually organic and may be comprised essentially of carbon and hydrogen with or without other elements such as oxygen or nitrogen. The solvent employed is essentially inert to the reaction, and, thus, should not contain active hydrogen as determined by the Zerewitinoff test. Solvents which may be employed include highly polar solvents such as dimethylformamide, esters, ethers, ketoesters, ketones, e.g., methyl ethyl ketone and acetone, glycol-ether-esters, chlorinated hydrocarbons, aliphatic and alicyclic hydrocarbon pyrrolidones, e.g., N-methyl pyrrolidones, hydrogenated furans, aromatic hydrocarbons, and the like, and mixtures thereof. The amount of solvent employed in making the prepolymer can vary widely and should be sufficient to provide a prepolymer solution having a sufficiently low viscosity to facilitate the preparation of the prepolymer used in this invention. It is desirable to minimize the amount of solvent to minimize VOC's. For example, the solids content of the prepolymer solution may be about 30 to 100 percent by weight, preferably about 60 to 100 percent by weight.

Prepolymer formation can be carried out by admixing the diisocyanate and other reactants in any suitable manner desired. To facilitate the reaction, from about 0.005 to about 1.000 percent by weight of the total reactants of a conventional urethane catalyst can be added. Such catalysts are exemplified by catalytically active compounds of bismuth, lead, tin, titanium, iron, antimony, uranium, cadmium, cobalt, thorium, aluminum, mercury, zinc, nickel, vanadium, cerium, as well as magnesium oxide, barium oxide, tertiary amines, pyrones and lactams, with the preferred catalyst being dibutyltin dilaurate.

The oil-modification reaction introduces unsaturated fatty acid moieties into the polymer structure. The oil-modified urethane polymers prepared in accordance with this invention have acid values sufficient for their salt form to be dispersible in the aqueous medium, and such values may often be about 10 to 50 on a nonvolatile basis. The solids content of the solutions may be, for instance, about 30 to 100 percent weight, preferably about 60 to 100 percent weight, before salt formation and dispersion in water.

The oil-modified urethane polymers of this invention are advantageously employed as aqueous coating compositions, i.e., the prepolymers are dispersed in an aqueous medium such as water. The dispersed prepolymer is then chain extended with an active hydrogen-containing compound having active hydrogen functionality with the proviso that a portion of the chain extension is conducted with an active hydrogen-containing compound having active hydrogen functionality of four or more. Frequently, the aqueous compositions have a relatively neutral pH, say, about 6 to 11, preferably about 6.5 to 9.0. It is noted that neutralizing the acid or amine salt of the prepolymer and chain extension can occur substantially simultaneously.

The urethane composition includes a promoter for promoting crosslinking by air oxidation of the ethylenic unsaturated portion of the urethane polymer after application. Suitable promoters include cobalt calcium, manganese or zirconium neodecanoate, 1,10- phenanthroline, and 2,2-bipyridyl.

The composition can contain other ingredients for coating compositions to modify the properties of the resultant oil-modified urethane, such as plasticizers, pigments, colorants, dyes, surfactants, thickeners, heat stabilizers, leveling agents, anti-catering agents, fillers, sedimentation inhibitors, ultraviolet-light absorbers, and the like. The additives such as promoters, heat stabilizers, ultraviolet-light absorbers, etc., can be intimately dispersed in the reaction mixture and apparently thereby become an integral part of the polymer urethane. Alternatively, the additive may be introduced after the urethane polymer has been formed, in which case the additive can be incorporated on the surface of the polymer or dispersed in the aqueous medium. The resulting urethane coating composition has improved mar and scuff resistance properties, and is air dryable, has a high hardness and is resistance to abrasions, chemicals, and stains.

### EXAMPLES

### Example 1

An oil ester polyol was prepared in a clean dry flask fitted with an agitator, thermometer, nitrogen inlet and condensor, wherein 2500 parts of linseed oil and 203.5 parts of pentaerythritol are reacted in the presence of 3.2 parts of lithium (2 percent) Ten Cem available from OMG, Inc., Cleveland, Ohio. On completion of the alcoholysis, 13.5 parts of tris nonyl phenyl phosphite color stabilizer is added. The resulting oil ester polyol had a hydroxyl value of 123.6. To 120 parts of the ester polyol, is added 18.2 parts of dimethylol propionic acid, 24 parts of a neopentyl glycol-1,6-hexane diol-adipic acid polyol having a hydroxyl value of 120. 96.4 parts of 4,4'-methylenebis (isocyanatocyclohexane), 43.2 parts of N-methyl pyrrolidinone and 0.08 parts of dibutyl tin dilaurate available as Metacure T-12 from Air Products and Chemicals, Inc., Allentown, Pennsylvania. The reaction mixture is heated to 85°C until the isocyanate content is constant. The resulting prepolymer is then added to 13.7 parts of triethyl amine, 2.7 parts of ethylene diamine, 1.6 parts of triethylene tetramine chain extender and 502.2 parts of water.

To 500 parts of this dispersion is added 1.14 parts of Cobalt (5 percent) Hydro Cure II cobalt neodecanoate promoter and 0.34 parts of Dri-RX 2,2-bipyridyl available from Mooney Chemicals, Inc., Cleveland, Ohio.

### Example 2

Example 1 is repeated except 1.6 parts of tetraethylene pentaamine is used as the chain extender instead of triethylene tetramine.

### Comparative Example 1

Example 1 is repeated except only ethylene diamine is used as the chain extender.

**Table 1**

| | **Example 1** | **Example 2** | **Comparative Example 1** |
|---|---|---|---|
| **Wet Properties:** | | | |
| NV% | 32 | 33 | 34 |
| pH | 8.1 | 7.8 | 7.8 |
| Viscosity cps @ 25°C | 99 | 33 | 39 |
| **Film Properties:** | | | |
| Dry hard, hrs | 1.0 | 1.0 | 2.0 |
| Scuff resistance | 4 | 4 | 3.5 |
| Mar resistance | Good | Good | Fair |
| Sward hardness | 40 | 40 | 40 |
| Chemical resistance | Good | Good | Fair |
| Impact, D/R | 160/160 | 160/160 | 160/160 |

Table 1 summarizes the wet and film properties of the Examples. Dry time is measured on a 3 mil (76.2 µm) thick wet film using a Gardner Circular Dry Time Recorder. Scuff resistance is measured on a 3 mil (76.2 µm) thick wet coating cured for 7 days at 77°F (25°C) and 50 percent relative humidity; placing the cured panel on the floor and holding down with one foot; vigorously kicking the panel 5 times with shoe that has a soft rubber soled shoe; immediately cleaning the scuff that the kick makes with mineral spirits (7 percent aromatic) and letting dry thoroughly; and rating the scuff from 0 to 5 with 0 being the worst and 5 being the best. Mar resistance is measured on a 3 mil (76.2 µm) thick wet coating cured for 7 days at 77°F (25°C) and 50 percent relative humidity; applying steady pressure to the cured film with the nail of your finger and moving finger from left to right and back several times; and rating the mar resistance as good if no scratch in the film is observed and as poor if scratches or (marks are present. Sward hardness is measured on a 3 mil (76.2 µm) thick wet film coating cured for 7 days at 77°C and 50 percent relative humidity using ASTM D 2134. Chemical resistance is measured on a 3 mil thick wet film coating cured for 7 days at 77°C and 50 percent relative humidity using ASTM D 1308-87. Impact resistance is measured on a 3 mil (76.2 µm) thick wet film coating cured for 7 days at 77°C and 50 percent relative humidity using ASTM D 2794-69.

## Claims

1. A water dispersible oil modified urethane polymer comprising:
(a) a prepolymer containing
(i) isocyanate groups
(ii) acid or amine salt forming groups,
and
(iii) ethylenic unsaturation resulting from reaction of said prepolymer with an unsaturated ester polyol
(b) an active hydrogen-containing compound having active hydrogen functionality of two or more; wherein at least 10 percent of the prepolymer is chain extended with an active hydrogen-containing compound having active hydrogen functionality of four or more.

2. The water dispersible oil modified urethane polymer according to Claim 1, wherein the active hydrogen-containing compound having active hydrogen functionality of four or more is triethylene tetramine, tripropylene tetramine or tetraethylene pentaamine.

3. The water dispersible oil modified urethane polymer according to Claim 1, wherein the isocyanate group is provided from the group consisting of 1,4-tetramethylene diisocyanate, 1,6-hexamethylene diisocyanate, 2,2,4-trimethyl-1,6-diisocyanatohexane, 1,10-decamethylene diisocyanate, 1,4-cyclohexylene diisocyanate, 4,4'-methylenebis(isocyanatocyclohexane), 1-isocyanato-3-isocyanatomethyl-3,5,5-trimethylcyclohexane, *m*- and *p*-phenylene diisocyanate, 2,6- and 2,4-tolylene diisocyanate, xylene diisocyanate, 4-chloro-1,3-phenylene diisocyanate, 4,4'-biphenylene diisocyanate, 4,4'-methylene diphenylisocyante, 1,5-naphthylene diisocyanate, 1,5-tetrahydronaphthylene diisocyanate, and polymethylene polyphenylisocyanates.

4. The water dispersible oil modified urethane polymer according to Claim 1, wherein the acid salt forming group is introduced into the prepolymer by a compound containing active hydrogen and active acid groups neutralized by a neutralizing base.

5. The water dispersible oil modified urethane polymer according to Claim 4, wherein the compound containing active hydrogen and active acid groups is selected from the group consisting of hydroxy and mercapto carboxylic acids, aminocarboxylic acids, aminohydroxy carboxylic acids, sulfonic acids, hydroxy sulfonic acids and aminosulfonic acids.

6. The water dispersible oil modified urethane polymer according to Claim 4, wherein the compound having active hydrogen and active acid groups is dimethylol propionic acid and the neutralizing base is a base selected from the group consisting of sodium hydroxide, potassium hydroxide, ammonium hydroxide, and tertiary amines.

7. The water dispersible oil modified urethane polymer according to Claim 1, wherein the amine salt forming group is introduced into the prepolymer by a compound containing active hydrogens and active basic groups neutralized by a neutralizing acid.

8. The water dispersible oil modified urethane polymer according to Claim 7, wherein the amine salt forming group is selected from the group consisting of aliphatic, cycloaliphatic, aromatic and heterocyclic amino alcohols, diols and triols; amines; diamines; triamines; and amides.

9. The water dispersible oil modified urethane polymer according to Claim 7, wherein the neutralizing acid is selected from the group consisting of hydrochloric acid, acetic acid, phosphoric acid, glycolic acid, and lactic acid.

10. The water dispersible oil modified urethane polymer according to Claim 1, wherein ethylenic unsaturation is provided by an ester polyol made by reaction of an aromatic or aliphatic polyol containing at least two hydroxyl groups per molecule with a fatty acid wherein a portion of the fatty acid is unsaturated.

11. The water dispersible oil modified urethane polymer according to Claim 10, wherein the polyol is selected from the group consisting of ethylene glycol, proplylene glycol, 1,3 propane diol, 1,3 butylene glycol, 1,4 butane diol, Bisphenol A, trimethylol propane, pentaerythritol, glycerin, neopentyl glycol, and cyclohexane dimethanol, and mixtures thereof.

12. The water dispersible oil modified urethane polymer according to Claim 1, wherein ethylenic unsaturation is provided by an ester polyol formed by the transesterification of a drying or a semi-drying oil with an aromatic or aliphatic polyol containing at least two hydroxyl groups per molecule.

13. The water dispersible oil modified urethane polymer according to Claim 12, wherein the polyol is selected from the group consisting of ethylene glycol, proplylene glycol, 1,3 propane diol, 1,3 butylene glycol, 1,4 butane diol, Bisphenol A, trimethylol propane, pentaerythritol, glycerin, neopentyl glycol, and cyclohexane dimethanol, and mixtures thereof.

14. The water dispersible oil modified urethane polymer according to Claim 12, wherein the oil is selected from the group consisting of linseed oil, soybean oil, safflower oil, tall oil, sunflower oil, dehydrated castor oil, tung oil, sardine oil, olive oil and cottonseed oil.

15. The water dispersible oil modified urethane polymer according to Claim 10, wherein the unsaturated fatty acid is selected from the group consisting of linoleic, palmitoleic, linolenic, eleostearic, arachidonic and ricinoleic acids.

16. The water dispersiblle oil modified urethane polymer according to Claim 1, wherein the prepolymer includes an additional polyol selected from the group consisting of polyester, polycarbonate, polyether, and acrylic polyols.

17. The water dispersible oil modified urethane polymer according to Claim 16, wherein the additional polyol is a neopentyl glycol-1,6-hexane diol-adipic acid polyol having a hydroxyl value of 120.

18. A mar and scuff resistant coating composition comprising a urethane composition dispersed in an aqueous medium comprising a prepolymer containing an organic polyisocyanate, acid or amine salt forming groups, ethylenic unsaturation resulting from reaction of said prepolymer with an unsaturated ester polyol, and an active hydrogen-containing compound having active hydrogen functionality of two or more; wherein at least 10 percent of the prepolymer is chain extended with an active hydrogen-containing compound having active hydrogen functionality of four or more; and a promoter which promotes crosslinking by air oxidation of the ethylenic unsaturation of the urethane composition.

19. The mar and scuff resistant coating composition according to Claim 18, wherein the active hydrogen-containing compound having active hydrogen functionality of four or more is triethylene tetramine, tripropylene tetramine or tetraethylene pentaamine.

20. The mar and scuff resistant coating composition according to Claim 18, wherein the acid salt forming group is introduced into the prepolymer by a compound containing active hydrogen and active acid groups neutralized by a neutralizing base.

21. The mar and scuff resistant coating composition according to Claim 20, wherein the compound containing active hydrogen and active acid groups is selected from the group consisting of hydroxy and mercapto carboxylic acids, aminocarboxylic acids, aminohydroxy carboxylic acids, sulfonic acids, hydroxy sulfonic acids and aminosulfonic acids.

22. The mar and scuff resistant coating composition according to Claim 20, wherein the compound having active hydrogen and active acid groups is dimethylol propionic acid and the neutralizing base is a base selected from the group consisting of sodium hydroxide, potassium hydroxide, ammonium hydroxide, and tertiary amines.

23. The mar and scuff resistant coating composition according to Claim 18, wherein the amine salt forming group is introduced into the prepolymer by a compound containing active hydrogens and active basic groups neutralized by a neutralizing acid.

24. The mar and scuff resistant coating composition according to Claim 23, wherein the amine salt forming group is selected from the group consisting of aliphatic, cycloaliphatic, aromatic and heterocyclic amino alcohols, diols and triols; amines; diamines; triamines; and amides.

25. The mar and scuff resistant coating composition according to Claim 23, wherein the neutralizing acid is selected from the group consisting of hydrochloric acid, acetic acid, phosphoric acid, glycollic acid and lactic acid.

26. The mar and scuff resistant coating composition according to Claim 18, wherein ethylenic unsaturation is provided by an ester polyol made by reaction of an aromatic or aliphatic polyol containing at least two hydroxyl groups per molecule with a fatty acid wherein a portion of the fatty acid is unsaturated.

27. The mar and scuff resistant coating composition according to Claim 26, wherein the polyol is selected from the group consisting of ethylene glycol, proplylene glycol, 1,3 propane diol, 1,3 butylene glycol, 1,4 butane diol, Bisphenol A, trimethylol propane, pentaerythritol, glycerin, neopentyl glycol, and cyclohcyane dimethanol, and mixtures thereof.

28. The mar and scuff resistant coating composition according to Claim 18, wherein ethylenic unsaturation is provided by transesterification of a drying or a semi-drying oil with an aromatic or aliphatic polyol containing at least two hydroxyl groups per molecule.

29. The mar and scuff resistant coating composition according to Claim 28, wherein the polyol is selected from the group consisting of ethylene glycol, proplylene glycol, 1,3 propane diol, 1,3 butylene glycol, 1,4 butane diol, Bisphenol A, trimethylol propane, pentaerythritol, glycerin, neopentyl glycol, and cyclohcyane dimethanol, and mixtures thereof.

30. The mar and scuff resistant coating composition according to Claim 26, wherein the fatty acid is selected from the group consisting of linoleic, palmitoleic, linolenic, eleostearic, arachidonic, and ricinoleic acids.

31. The mar and scuff resistant coating composition according to Claim 28, wherein the oil is selected from the group consisting of linseed oil, soybean oil, safflower oil, tall oil, sunflower oil, dehydrated castor oil, tung oil, sardine oil, olive oil, and cottonseed oil.

32. The mar and scuff resistant coating composition according to Claim 18, wherein the prepolymer includes an additional polyol selected from the group consisting of polyester, polycarbonate, polyether, and acrylic polyols.

33. The mar and scuff resistant coating composition according to Claim 32, wherein the additional polyol is a neopentyl glycol-1,6-hexane diol-adipic acid polyol having a hydroxyl value of 120.

34. A method of forming a mar and scuff resistant water dispersed oil modified urethane polymer, the method comprising the steps of:
(a) forming a prepolymer having isocyanate groups, acid or amine salt forming groups and ethylenic unsaturation resulting from reaction of said prepolymer with an unsaturated ester polyol;
(b) neutralizing the acid or amine salt of the prepolymer formed in step (a);
(c) dispersing the neutralized prepolymer in an aqueous medium; and
(d) chain extending the dispersed prepolymer with an active hydrogen-containing compound having active hydrogen functionality with the proviso that at least 10 percent of the chain extension is conducted with an active hydrogen-containing compound having active hydrogen functionality of four or more.

35. The method according to Claim 34, wherein the active hydrogen-containing compound having active hydrogen functionality of four or more is triethylene tetramine, tripropylene tetramine or tetraethylene pentaamine.

36. The method according to Claim 34, wherein the isocyanate group is derived from the group consisting of 1,4-tetramethylene diisocyanate, 1,6-hexamethylene diisocyanate, 2,2,4-trimethyl-1,6-diisocyanatohexane, 1,10-decamethylene diisocyanate, 1,4-cyclohexylene diisocyanate, 4,4'-methylenebis(isocyanatocyclohexane), 1-isocyanato-3-isocyanatomethyl-3,5,5-trimethyl-cyclohexane, *m*- and *p*-phenylene diisocyanate, 2,6- and 2,4-tolylene diisocyanate, xylene diisocyanate, 4-chloro-1,3-phenylene diisocyanate, 4,4'-biphenylene diisocyanate, 4,4'-methylene diphenylisocyante, 1,5-naphthylene diisocyanate, 1,5-tetrahydronaphthylene diisocyanate, and polymethylene polyphenylisocyanates.

37. The method according to Claim 34, wherein the acid salt forming group is introduced into the prepolymer by a compound containing active hydrogen and active acid groups neutralized by a neutralizing base.

38. The method according to Claim 37, wherein the compound containing active hydrogen and active acid groups is selected from the group consisting of hydroxy and mercapto carboxylic acids, aminocarboxylic acids, aminohydroxy carboxylic acids, sulfonic acids, hydroxy sulfonic acids and aminosulfonic acids.

39. The method according to Claim 37, wherein the compound having active hydrogen and active acid groups is dimethylol propionic acid and the neutralizing base is a base selected from the group consisting of sodium hydroxide, potassium hydroxide, ammonium hydroxide, and tertiary amines.

40. The method according to Claim 34, wherein the amine salt forming group is introduced into the prepolymer by a compound containing active hydrogens and active basic groups neutralized by a neutralizing acid.

41. The method according to Claim 40, wherein the amine salt forming group is selected from the group consisting of aliphatic, cycloaliphatic, aromatic and heterocyclic amino alcohols, diols and triols; amines; diamines; triamines; and amides.

42. The method according to Claim 40, wherein the neutralizing acid is selected from the group consisting of hydrochloric acid, acetic acid, phosphoric acid, glycolic acid, and lactic acid.

43. The method according to Claim 34, wherein steps (b) and (d) are done substantially simultaneously.

## Patentansprüche

1. In Wasser dispergierbares, ölmodifiziertes Urethanpolymer enthaltend:
(a) ein Präpolymer mit
(i) Isocyanatgruppen,
(ii) salzbildende Säure- oder Aminogruppen, und
(iii) olefinischen Doppelbindungen aus einer Reaktion des Präpolymers mit einem ungesättigten Esterpolyol
(b) eine aktiven Wasserstoff enthaltende Verbindung mit zwei oder mehr aktiven Wasserstoffen pro Molekül;
worin wenigstens 10% der Kette des Präpolymers durch eine aktiven Wasserstoff enthaltende Verbindung mit vier oder mehr aktiven Wasserstoffen pro Molekül verlängert sind.

2. In Wasser dispergierbares, ölmodifiziertes Urethanpolymer nach Anspruch 1, dadurch gekennzeichnet, daß die aktiven Wasserstoff enthaltende Verbindung mit vier oder mehr aktiven Wasserstoffen pro Molekül Triethylentetramin, Tripropylentetramin oder Tetraethylenpentamin ist.

3. In Wasser dispergierbares, ölmodifiziertes Urethanpolymer nach Anspruch 1, dadurch gekennzeichnet, daß die Isocyanatgruppe durch die Gruppe 1,4-Tetramethylendiisocyanat, 1,6-Hexamethylendiisocyanat, 2,2,4-Trimethyl-1,6-hexandiisocyanat, 1,10-Decamethylendiisocyanat, 1,4-Cyclohexandiisocyanat, 4,4'-Cyclohexan-bismethylendiisocyanat, 1-Isocyanato-3-isocyanatomethyl-3,5,5-trimethylcyclohexan, m- und p-Phenylendiisocyanat, 2,6- und 2,4-Toluoldiisocyanat, Xyloldiisocyanat, 4-Chlor-1,3-phenylendiisocyanat, 4,4'-Diphenyldiisocyanat, 4,4'-Diphenyl-bis-methylendiisocyanat, 1,5-Naphthalindiisocyanat, 1,5-Tetrahydronaph-thalindiisocyanat, und Polymethylenpolyphenylisocyanate bereitgestellt ist.

4. In Wasser dispergierbares, ölmodifiziertes Urethanpolymer nach Anspruch 1, dadurch gekennzeichnet, daß die salzbildende Säuregruppe in das Präpolymer durch eine Verbindung eingeführt ist, die aktiven Wasserstoff und aktive Säuregruppen enthält, die durch eine neutralisierende Base neutralisiert sind.

5. In Wasser dispergierbares, ölmodifiziertes Urethanpolymer nach Anspruch 4, dadurch gekennzeichnet, daß die aktiven Wasserstoff und aktive Säuregruppen enthaltende Verbindung aus der Gruppe Hydroxy- und Mercaptocarbonsäuren, Aminocarbonsäuren, Aminohydroxycarbonsäuren, Sulfonsäuren, Hydroxysulfonsäuren und Aminosulfonsäuren ausgewählt ist.

6. In Wasser dispergierbares, ölmodifiziertes Urethanpolymer nach Anspruch 1, dadurch gekennzeichnet, daß die aktiven Wasserstoff und aktive Säuregruppen enthaltende Verbindung Dimethylolpropionsäure ist und die neutralisierende Base aus der Gruppe Natriumhydroxid, Kaliumhydroxid, Ammoniumhydroxid und tertiäre Amine ausgewählt ist.

7. In Wasser dispergierbares, ölmodifiziertes Urethanpolymer nach Anspruch 1, dadurch gekennzeichnet, daß die salzbildende Aminogruppe in das Präpolymer durch eine Verbindung eingeführt ist, die aktive Wasserstoffe und aktive basische Gruppen enthält, die durch eine neutralisierende Säure neutralisiert sind.

8. In Wasser dispergierbares, ölmodifiziertes Urethanpolymer nach Anspruch 7, dadurch gekennzeichnet, daß die salzbildende Aminogruppe aus der Gruppe aliphatische, cycloaliphatische, aromatische und heterocyclische Aminoalkohole, -diole und -triole; Amine; Diamine; Triamine; und Amide ausgewählt ist.

9. In Wasser dispergierbares, ölmodifiziertes Urethanpolymer nach Anspruch 7, dadurch gekennzeichnet, daß die neutralisierende Säure aus der Gruppe Salzsäure, Essigsäure, Phosphorsäure, Glycolsäure und Milchsäure ausgewählt ist.

10. In Wasser dispergierbares, ölmodifiziertes Urethanpolymer nach Anspruch 1, dadurch gekennzeichnet, daß die olefinischen Doppelbindungen durch ein Esterpolyol bereitgestellt sind, das durch Reaktion eines aromatischen oder aliphatischen Polyols, das wenigstens zwei Hydroxylgruppen pro Molekül enthält, mit einer Fettsäure gebildet ist, wobei ein Teil der Fettsäure ungesättigt ist.

11. In Wasser dispergierbares, ölmodifiziertes Urethanpolymer nach Anspruch 10, dadurch gekennzeichnet, daß das Polyol aus der Gruppe Ethylenglycol, Propylenglycol, 1,3-Propandiol, 1,3-Butylenglykol, 1,4-Butandiol, Bisphenol A, Trimethylolpropan, Pentaerythritol, Glycerin, Neopentylglycol, Cyclohexandimethanol und deren Mischungen ausgewählt ist.

12. In Wasser dispergierbares, ölmodifiziertes Urethanpolymer nach Anspruch 1, dadurch gekennzeichnet, daß die olefinischen Doppelbindungen durch ein Esterpolyol bereitgestellt sind, das durch Umesterung eines trocknenden oder halbtrocknenden Öls mit einem aromatischen oder aliphatischen Polyol mit wenigstens zwei Hydroxylgruppen pro Molekül gebildet ist.

13. In Wasser dispergierbares, ölmodifiziertes Urethanpolymer nach Anspruch 12, dadurch gekennzeichnet, daß das Polyol aus der Gruppe Ethylenglycol, Propylenglycol, 1,3-Propandiol, 1,3-Butylenglykol, 1,4-Butandiol, Bisphenol A, Trimethylolpropan, Pentaerythritol, Glycerin, Neopentylglycol, Cyclohexandimethanol und deren Mischungen ausgewählt ist.

14. In Wasser dispergierbares, ölmodifiziertes Urethanpolymer nach Anspruch 12, dadurch gekennzeichnet, daß das Öl aus der Gruppe Leinöl, Sojaöl, Safloröl, Tallöl, dehydriertes Ricinusöl, Holzöl, Sardinenöl, Olivenöl und Baumwollsamenöl ausgewählt ist.

15. In Wasser dispergierbares, ölmodifiziertes Urethanpolymer nach Anspruch 10, dadurch gekennzeichnet, daß die ungesättigte Fettsäure aus der Gruppe Linolsäure, Palmitoleinsäure, Linolensäure, Eleostearinsäure (9,11,13-Octatriencarbonsäure), Arachidonsäure und Ricinolsäure ausgewählt ist.

16. In Wasser dispergierbares, ölmodifiziertes Urethanpolymer nach Anspruch 1, dadurch gekennzeichnet, daß das Präpolymer ein zusätzliches Polyol enthält, das aus der Gruppe Polyester, Polycarbonat, Polyether und Acrylpolyole ausgewählt ist.

17. In Wasser dispergierbares, ölmodifiziertes Urethanpolymer nach Anspruch 16, dadurch gekennzeichnet, daß das zusätzliche Polyol ein Neopentylglycol-1,6-hexandioladipinsäurepolyol mit einer Hydroxylzahl von 120 ist.

18. Kratz- und verschleißfeste Beschichtungszusammensetzung enthaltend eine in einem wäßrigen Medium dispergierte Urethanzusammensetzung aus einem Präpolymer, das ein organisches Polyisocyanat, salzbildende Säure- oder Aminogruppen, olefinische Doppelbindungen aus einer Reaktion des Präpolymers mit einem ungesättigten Esterpolyol, und eine aktiven Wasserstoff enthaltende Verbindung mit zwei oder mehr aktiven Wasserstoffen pro Molekül enthält, wobei wenigstens 10% der Kette des Präpolymers durch eine aktiven Wasserstoff enthaltende Verbindung mit vier oder mehr aktiven Wasserstoffen pro Molekül verlängert sind und ein Promotor enthalten ist, der die Vernetzung der olefinischen Doppelbindungen in der Urethanzusammensetzung durch Luftoxidation fördert.

19. Kratz- und verschleißfeste Beschichtungszusammensetzung nach Anspruch 18, dadurch gekennzeichnet, daß die aktiven Wasserstoff enthaltende Verbindung mit vier oder mehr aktiven Wasserstoffen pro Molekül Triethylentetramin, Tripropylentetramin oder Tetraethylenpentamin ist.

20. Kratz- und verschleißfeste Beschichtungszusammensetzung nach Anspruch 18, dadurch gekennzeichnet, daß die salzbildende Säuregruppe in das Präpolymer durch eine Verbindung eingeführt ist, die aktiven Wasserstoff und aktive Säuregruppen enthält, die durch eine neutralisierende Base neutralisiert sind.

21. Kratz- und verschleißfeste Beschichtungszusammensetzung nach Anspruch 20, dadurch gekennzeichnet, daß die aktiven Wasserstoffund aktive Säuregruppen enthaltende Verbindung aus der Gruppe Hydroxy- und Mercaptocarbonsäuren, Aminocarbonsäuren, Aminohydroxycarbonsäuren, Sulfonsäuren, Hydroxysulfonsäuren und Aminosulfonsäuren ausgewählt ist.

22. Kratz- und verschleißfeste Beschichtungszusammensetzung nach Anspruch 20, dadurch gekennzeichnet, daß die aktiven Wasserstoff und aktive Säuregruppen enthaltende Verbindung Dimethylolpropionsäure ist und die neutralisierende Base aus der Gruppe Natriumhydroxid, Kaliumhydroxid, Ammoniumhydroxid und tertiäre Amine ausgewählt ist.

23. Kratz- und verschleißfeste Beschichtungszusammensetzung nach Anspruch 18, dadurch gekennzeichnet, daß die salzbildende Aminogruppe in das Präpolymer durch eine Verbindung eingeführt ist, die aktive Wasserstoffe und aktive basische Gruppen enthält, die durch eine neutralisierende Säure neutralisiert sind.

24. Kratz- und verschleißfeste Beschichtungszusammensetzung nach Anspruch 23, dadurch gekennzeichnet, daß die salzbildende Aminogruppe aus der Gruppe aliphatische, cycloaliphatische, aromatische und heterocyclische Aminoalkohole, -diole und -triole; Amine; Diamine; Triamine; und Amide ausgewählt ist.

25. Kratz- und verschleißfeste Beschichtungszusammensetzung nach Anspruch 23, dadurch gekennzeichnet, daß die neutralisierende Säure aus der Gruppe Salzsäure, Essigsäure, Phosphorsäure, Glycolsäure und Milchsäure ausgewählt ist.

26. Kratz- und verschleißfeste Beschichtungszusammensetzung nach Anspruch 18, dadurch gekennzeichnet, daß die olefinischen Doppelbindungen durch ein Esterpolyol bereitgestellt sind, das durch Reaktion eines aromatischen oder aliphatischen Polyols, das wenigstens zwei Hydroxylgruppen pro Molekül enthält, mit einer Fettsäure gebildet ist, wobei ein Teil der Fettsäure ungesättigt ist.

27. Kratz- und verschleißfeste Beschichtungszusammensetzung nach Anspruch 26, dadurch gekennzeichnet, daß das Polyol aus der Gruppe Ethylenglycol, Propylenglycol, 1,3-Propandiol, 1,3-Butylenglykol, 1,4-Butandiol, Bisphenol A, Trimethylolpropan, Pentaerythritol, Glycerin, Neopentylglycol, Cyclohexandimethanol und deren Mischungen ausgewählt ist.

28. Kratz- und verschleißfeste Beschichtungszusammensetzung nach Anspruch 18, dadurch gekennzeichnet, daß olefinische Doppelbindungen durch Umesterung eines trocknenden oder halbtrocknenden Öls mit einem aromatischen oder aliphatischen Polyol bereitgestelt sind, das wenigstens zwei Hydroxylgruppen pro Molekül enthält.

29. Kratz- und verschleißfeste Beschichtungszusammensetzung nach Anspruch 28, dadurch gekennzeichnet, daß das Polyol aus der Gruppe Ethylenglycol, Propylenglycol, 1,3-Propandiol, 1,3-Butylenglykol, 1,4-Butandiol, Bisphenol A, Trimethylolpropan, Pentaerythritol, Glycerin, Neopentylglycol, Cyclohexandimethanol und deren Mischungen ausgewählt ist.

30. Kratz- und verschleißfeste Beschichtungszusammensetzung nach Anspruch 26, dadurch gekennzeichnet, daß die Fettsäure aus der Gruppe Linolsäure, Palmitoleinsäure, Linolensäure, Eleostearinsäure (9,11,13-Octatriencarbonsäure), Arachidonsäure und Ricinolsäure ausgewählt ist.

31. Kratz- und verschleißfeste Beschichtungszusammensetzung nach Anspruch 28, dadurch gekennzeichnet, daß das Öl aus der Gruppe Leinöl, Sojaöl, Safloröl, Tallöl, Sonnenblumenöl, dehydriertes Ricinusöl, Holzöl, Sardinenöl, Olivenöl und Baumwollsamenöl ausgewählt ist.

32. Kratz- und verschleißfeste Beschichtungszusammensetzung nach Anspruch 18, dadurch gekennzeichnet, daß das Präpolymer ein zusätzliches Polyol enthält, das aus der Gruppe Polyester, Polycarbonat, Polyether und Acrylpolyole ausgewählt ist.

33. Kratz- und verschleißfeste Beschichtungszusammensetzung nach Anspruch 32, dadurch gekennzeichnet, daß das zusätzliche Polyol ein Neopentylglycol-1,6-hexandioladipinsäurepolyol mit einer Hydroxylzahl von 120 ist.

34. Verfahren zur Bildung eines kratz- und verschleißfesten, in Wasser dispergierten, ölmodifizierten Urethanpolymers, enthaltend die folgenden Schritte:
(a) Bildung eines Präpolymers mit Isocyanatgruppen, salzbildenden Säure- oder Aminogruppen, und olefinischen Doppelbindungen aus einer Reaktion des Präpolymers mit einem ungesättigten Esterpolyol;
(b) Neutralisieren des Säure- oder Aminsalzes des in Schritt (a) gebildeten Präpolymers;
(c) Dispergieren des neutralisierten Präpolymers in einem wäßrigem Medium; und
(d) Verlängern der Kette des dispergierten Präpolymers mit einer aktiven Wasserstoff enthaltenden Verbindung unter der Voraussetzung, daß wenigstens 10% der Kettenverlängerung durch eine aktiven Wasserstoff enthaltende Verbindung mit vier oder mehr aktiven Wasserstoffen pro Molekül durchgeführt werden.

35. Verfahren nach Anspruch 34, dadurch gekennzeichnet, daß die aktiven Wasserstoff enthaltende Verbindung mit vier oder mehr aktiven Wasserstoffen pro Molekül Triethylentetramin, Tripropylentetramin oder Tetraethylenpentamin ist.

36. Verfahren nach Anspruch 34, dadurch gekennzeichnet, daß die Isocyanatgruppe aus der Gruppe 1,4-Tetramethylendiisocyanat, 1,6-Hexamethylendiisocyanat, 2,2,4-Trimethyl-1,6-hexandiisocyanat, 1,10-Decamethylendiisocyanat, 1,4-Cyclohexandiisocyanat, 4,4'-Cyclohexan-bis-methylendiisocyanat, 1-Isocyanato-3-isocyanatomethyl-3,5,5-trimethylcyclohexan, m- und p-Phenylendiisocyanat, 2,6- und 2,4-Toluoldiisocyanat, Xyloldiisocyanat, 4-Chlor-1,3-phenylendiisocyanat, 4,4'-Diphenyldiisocyanat, 4,4'-Diphenyl-bis-methylendiisocyanat, 1 ,5-Naphthalindiisocyanat, 1,5-Tetrahydronaphthalindiisocyanat, und Polymethylenpolyphenylisocyanate stammt.

37. Verfahren nach Anspruch 34, dadurch gekennzeichnet, daß die salzbildende Säuregruppe in das Präpolymer durch eine Verbindung eingeführt wird, die aktiven Wasserstoff und aktive Säuregruppen enthält, die durch eine neutralisierende Base neutralisiert sind.

38. Verfahren nach Anspruch 37, dadurch gekennzeichnet, daß die aktiven Wasserstoff und aktive Säuregruppen enthaltende Verbindung aus der Gruppe Hydroxy- und Mercaptocarbonsäuren, Aminocarbonsäuren, Aminohydroxycarbonsäuren, Sulfonsäuren, Hydroxysulfonsäuren und Aminosulfonsäuren ausgewählt wird.

39. Verfahren nach Anspruch 37, dadurch gekennzeichnet, daß die aktiven Wasserstoff und aktive Säuregruppen enthaltende Verbindung Dimethylolpropionsäure ist und die neutralisierende Base aus der Gruppe Natriumhydroxid, Kaliumhydroxid, Ammoniumhydroxid und tertiäre Amine ausgewählt wird.

40. Verfahren nach Anspruch 34, dadurch gekennzeichnet, daß die salzbildende Aminogruppe in das Präpolymer durch eine aktive Verbindung eingeführt wird, die aktive Wasserstoffe und aktive basische Gruppen enthält, die durch eine neutralisierende Säure neutralisiert sind.

41. Verfahren nach Anspruch 40, dadurch gekennzeichnet, daß die salzbildende Aminogruppe aus der Gruppe aliphatische, cycloaliphatische, aromatische und heterocyclische Aminoalkohole, -diole und -triole; Amine; Diamine; Triamine; und Amide ausgewählt wird.

42. Verfahren nach Anspruch 40, dadurch gekennzeichnet, daß die neutralisierende Säure aus der Gruppe Salzsäure, Essigsäure, Phosphorsäure, Glycolsäure und Milchsäure ausgewählt wird.

43. Verfahren nach Anspruch 34, dadurch gekennzeichnet, daß die Schritte (b) und (d) im wesentlichen gleichzeitig ausgefuhrt werden.

## Revendications

1. Polymère d'uréthane modifié par une huile pouvant être dispersé dans l'eau comprenant :
(a) un prépolymère contenant:
(i) des groupes isocyanate
(ii) des groupes formant un sel d'acide ou d'amine, et
(iii) une insaturation éthylénique résultant d'une réaction de ce prépolymère avec un ester polyol insaturé,
(b) un composé contenant des atomes d'hydrogène actifs ayant une fonctionnalité hydrogène actif de deux ou plus;
dans lequel au moins 10% du prépolymère ont subi un allongement de chaîne avec un composé contenant des atomes d'hydrogène actifs ayant une fonctionnalité hydrogène actif de quatre ou plus.

2. Polymère d'uréthane modifié par une huile pouvant être dispersé dans l'eau suivant la revendication 1, dans lequel le composé contenant des atomes d'hydrogène actifs ayant une fonctionnalité hydrogène actif de quatre ou plus est la triéthylène tétramine, la tripropylène tétramine ou la tétraéthylène pentaamine.

3. Polymère d'uréthane modifié par une huile pouvant être dispersé dans l'eau suivant la revendication 1, dans lequel le groupe isocyanate est fourni à partir du groupe consistant en 1,4-tétraméthylène diisocyanate, 1,6-hexaméthylène diisocyanate, 2,2,4-triméthyl-1,6-diisocyanatohexane, 1,10-décaméthylène diisocyanate, 1,4-cyclohexylène diisocyanate, 4,4'-méthylènebis-(isocyanatocyclohexane), 1-isocyanato-3-isocyanatométhyl-3,5,5-triméthylcyclohexane, m- et p-phénylène diisocyanate, 2,6- et 2,4-tolylène diisocyanate, xylène diisocyanate, 4-chloro-1,3-phénylène diisocyanate, 4,4'-biphénylène diisocyanate, 4,4'-méthylène diphénylisocyanate, 1,5-naphtylène diisocyanate, 1,5-tétra-hydronaphtylène diisocyanate et polyméthylène polyphénylisocyanates.

4. Polymère d'uréthane modifié par une huile pouvant être dispersé dans l'eau suivant la revendication 1, dans lequel le groupe formant un sel d'acide est introduit dans le prépolymère par un composé contenant des atomes d'hydrogène actifs et des groupes acides actifs neutralisés par une base neutralisante.

5. Polymère d'uréthane modifié par une huile pouvant être dispersé dans l'eau suivant la revendication 4, dans lequel le composé contenant des atomes d'hydrogène actifs et des groupes acides actifs est choisi dans le groupe consistant en acides hydroxy et mercapto carboxyliques, acides amino carboxyliques, acides aminohydroxy carboxyliques, acides sulfoniques, acides hydroxy sulfoniques et acides aminosulfoniques.

6. Polymère d'uréthane modifié par une huile pouvant être dispersé dans l'eau suivant la revendication 4, dans lequel le composé contenant des atomes d'hydrogène actifs et des groupes acides actifs est l'acide diméthylol propionique et la base neutralisante est une base choisie dans le groupe consistant en hydroxyde de sodium, hydroxyde de potassium, hydroxyde d'ammonium et amines tertiaires.

7. Polymère d'uréthane modifié par une huile pouvant être dispersé dans l'eau suivant la revendication 1, dans lequel le groupe formant un sel d'amine est introduit dans le prépolymère par un composé contenant des atomes d'hydrogène actifs et des groupes basiques actifs neutralisés par un acide neutralisant.

8. Polymère d'uréthane modifié par une huile pouvant être dispersé dans l'eau suivant la revendication 7, dans lequel le groupe formant un sel d'amine est choisi dans le groupe consistant en amino alcools, diols et triols aliphatiques, cycloaliphatiques, aromatiques et hétérocycliques; amines; diamines; triamines; et amides.

9. Polymère d'uréthane modifié par une huile pouvant être dispersé dans l'eau suivant la revendication 7, dans lequel l'acide neutralisant est choisi dans le groupe consistant en acide chlorhydrique, acide acétique, acide phosphorique, acide glycolique et acide lactique.

10. Polymère d'uréthane modifié par une huile pouvant être dispersé dans l'eau suivant la revendication 1, dans lequel l'insaturation éthylénique est fournie par un ester polyol obtenu par réaction d'un polyol aromatique ou aliphatique contenant au moins deux groupes hydroxy par molécule avec un acide gras dans lequel une partie de l'acide gras est insaturée.

11. Polymère d'uréthane modifié par une huile pouvant être dispersé dans l'eau suivant la revendication 10, dans lequel le polyol est choisi dans le groupe consistant en éthylène glycol, propylène glycol, 1,3-propane diol, 1,3-butylène glycol, 1,4-butane diol, Bisphénol A, triméthylol propane, pentaérythritol, glycérine, néopentyl glycol et cyclohexane diméthanol, et leurs mélanges.

12. Polymère d'uréthane modifié par une huile pouvant être dispersé dans l'eau suivant la revendication 1, dans lequel l'insaturation éthylénique est fournie par un ester polyol formé par la transestérification d'une huile siccative ou semi-siccative avec un polyol aromatique ou aliphatique contenant au moins deux groupes hydroxy par molécule.

13. Polymère d'uréthane modifié par une huile pouvant être dispersé dans l'eau suivant la revendication 12, dans lequel le polyol est choisi dans le groupe consistant en éthylène glycol, propylène glycol, 1,3-propane diol, 1,3-butylène glycol, 1,4-butane diol, Bisphénol A, triméthylol propane, pentaérythritol, glycérine, néopentyl glycol et cyclohexane diméthanol, et leurs mélanges.

14. Polymère d'uréthane modifié par une huile pouvant être dispersé dans l'eau suivant la revendication 12, dans lequel l'huile est choisie dans le groupe consistant en huile de lin, huile de soja, huile de carthame, tall oil, huile de tournesol, huile de ricin déshydratée, huile d'abrasin, huile de sardine, huile d'olive et huile de coton.

15. Polymère d'uréthane modifié par une huile pouvant être dispersé dans l'eau suivant la revendication 10, dans lequel l'acide gras insaturé est choisi dans le groupe consistant en acides linoléique, palmitoléique, linolénique, éléostéarique, arachidonique et ricinoléique.

16. Polymère d'uréthane modifié par une huile pouvant être dispersé dans l'eau suivant la revendication 1, dans lequel le prépolymère comprend un polyol supplémentaire choisi dans le groupe consistant en polyester, polycarbonate, polyéther polyols et polyols acryliques.

17. Polymère d'uréthane modifié par une huile pouvant être dispersé dans l'eau suivant la revendication 16, dans lequel le polyol supplémentaire est un néopentyl glycol-1,6-hexane diol-acide adipique polyol ayant un indice hydroxy de 120.

18. Composition de revêtement résistante aux rayures et à l'abrasion comprenant une composition d'uréthane dispersée dans un milieu aqueux, comprenant un prépolymère contenant un polyisocyanate organique, des groupes formant un sel d'acide ou d'amine, une insaturation éthylénique résultant d'une réaction de ce prépolymère avec un ester polyol insaturé, et un composé contenant des atomes d'hydrogène actifs ayant une fonctionnalité hydrogène actif de deux ou plus; où au moins 10% du prépolymère ont subi un allongement de chaîne avec un composé contenant des atomes d'hydrogène actifs ayant une fonctionnalité hydrogène actif de quatre ou plus; et un activateur qui favorise une réticulation par oxydation par l'air de l'insaturation éthylénique de la composition d'uréthane.

19. Composition de revêtement résistante aux rayures et à l'abrasion suivant la revendication 18, dans laquelle le composé contenant des atomes d'hydrogène actifs ayant une fonctionnalité hydrogène actif de quatre ou plus est la triéthylène tétramine, la tripropylène tétramine ou la tétraéthylène pentaamine.

20. Composition de revêtement résistante aux rayures et à l'abrasion suivant la revendication 18, dans laquelle le groupe formant un sel d'acide est introduit dans le prépolymère par un composé contenant des groupes hydrogène actifs et des groupes acides actifs neutralisés par une base neutralisante.

21. Composition de revêtement résistante aux rayures et à l'abrasion suivant la revendication 20, dans laquelle le composé contenant des groupes hydrogène actifs et des groupes acides actifs est choisi dans le groupe consistant en acides hydroxy et mercapto carboxyliques, acides amino carboxyliques, acides aminohydroxy carboxyliques, acides sulfoniques, acides hydroxy sulfoniques et acides aminosulfoniques.

22. Composition de revêtement résistante aux rayures et à l'abrasion suivant la revendication 20, dans laquelle le composé contenant des groupes hydrogène actifs et des groupes acides actifs est l'acide diméthylol propionique et la base neutralisante est une base choisie dans le groupe consistant en hydroxyde de sodium, hydroxyde de potassium, hydroxyde d'ammonium et amines tertiaires.

23. Composition de revêtement résistante aux rayures et à l'abrasion suivant la revendication 18, dans laquelle le groupe formant un sel d'amine est introduit dans le prépolymère par un composé contenant des atomes d'hydrogène actifs et des groupes basiques actifs neutralisés par un acide neutralisant.

24. Composition de revêtement résistante aux rayures et à l'abrasion suivant la revendication 23, dans laquelle le groupe formant un sel d'amine est choisi dans le groupe consistant en aminoalcools, diols et triols aliphatiques, cycloaliphatiques, aromatiques et hétérocycliques; amines; diamines; triamines; et amides.

25. Composition de revêtement résistante aux rayures et à l'abrasion suivant la revendication 23, dans laquelle l'acide neutralisant est choisi dans le groupe consistant en acide chlorhydrique, acide acétique, acide phosphorique, acide glycolique et acide lactique.

26. Composition de revêtement résistante aux rayures et à l'abrasion suivant la revendication 18, dans laquelle l'insaturation éthylénique est fournie par un ester polyol fait par la réaction d'un polyol aromatique ou aliphatique contenant au moins deux groupes hydroxy par molécule avec un acide gras dans lequel une partie de l'acide gras est insaturée.

27. Composition de revêtement résistante aux rayures et à l'abrasion suivant la revendication 26, dans laquelle le polyol est choisi dans le groupe consistant en éthylène glycol, propylène glycol, 1,3-propane diol, 1,3-butylène glycol, 1,4-butane diol, Bisphénol A, triméthylol propane, pentaérythritol, glycérine, néopentyl glycol et cyclohexane diméthanol, et leurs mélanges.

28. Composition de revêtement résistante aux rayures et à l'abrasion suivant la revendication 18, dans laquelle l'insaturation éthylénique est fournie par un ester polyol formé par la transestérification d'une huile siccative ou semi-siccative avec un polyol aromatique ou aliphatique contenant au moins deux groupes hydroxy par molécule.

29. Composition de revêtement résistante aux rayures et à l'abrasion suivant la revendication 28, dans laquelle le polyol est choisi dans le groupe consistant en éthylène glycol, propylène glycol, 1,3-propane diol, 1,3-butylène glycol, 1,4-butane diol, Bisphénol A, triméthylol propane, pentaérythritol, glycérine, néopentyl glycol et cyclohexane diméthanol, et leurs mélanges.

30. Composition de revêtement résistante aux rayures et à l'abrasion suivant la revendication 26, dans laquelle l'acide gras insaturé est choisi dans le groupe consistant en acides linoléique, palmitoléique, linolénique, éléostéarique, arachidonique et ricinoléique.

31. Composition de revêtement résistante aux rayures et à l'abrasion suivant la revendication 28, dans laquelle l'huile est choisie dans le groupe consistant en huile de lin, huile de soja, huile de carthame, tall oil, huile de tournesol, huile de ricin déshydratée, huile d'abrasin, huile de sardine, huile d'olive et huile de coton.

32. Composition de revêtement résistante aux rayures et à l'abrasion suivant la revendication 18, dans laquelle le prépolymère comprend un polyol supplémentaire choisi dans le groupe consistant en polyester, polycarbonate, polyéther polyols et polyols acryliques.

33. Composition de revêtement résistante aux rayures et à l'abrasion suivant la revendication 32, dans laquelle le polyol supplémentaire est un néopentyl glycol-1,6-hexane diol-acide adipique polyol ayant un indice hydroxy de 120.

34. Procédé pour la formation d'un polymère d'uréthane modifié par une huile pouvant être dispersé dans l'eau, le procédé comprenant les étapes de :
(a) formation d'un prépolymère ayant des groupes isocyanate, des groupes formant un sel d'acide ou d'amine et une insaturation éthylénique résultant d'une réaction de ce prépolymère avec un ester polyol insaturé,
(b) neutralisaton du sel d'acide ou d'amine du prépolymère formé dans l'étape (a);
(c) dispersion du prépolymère neutralisé dans un milieu aqueux; et
(d) allongement de la chaîne du prépolymère dispersé avec un composé contenant des atomes d'hydrogène actifs ayant une fonctionnalité hydrogène actif, à condition qu'au moins 10% de l'allongement de chaîne soient réalisés avec un composé contenant des atomes d'hydrogène actifs ayant une fonctionnalité hydrogène actif de quatre ou plus.

35. Procédé suivant la revendication 34, dans lequel le composé contenant des atomes d'hydrogène actifs ayant une fonctionnalité hydrogène actif de quatre ou plus est la triéthylène tétramine, la tripropylène tétramine ou la tétraéthylène pentaamine.

36. Procédé suivant la revendication 34, dans lequel le groupe isocyanate est obtenu à partir du groupe consistant en 1,4-tétraméthylène diisocyanate, 1,6-hexaméthylène diisocyanate, 2,2,4-triméthyl-1,6-diisocyanatohexane, 1,10-décaméthylène diisocyanate, 1,4-cyclohexylène diisocyanate, 4,4'-méthylènebis-(isocyanatocyclohexane), 1-isocyanato-3-isocyanatométhyl-3,5,5-triméthylcyclohexane, m- et p-phénylène diisocyanate, 2,6- et 2,4-tolylène diisocyanate, xylène diisocyanate, 4-chloro-1,3-phénylène diisocyanate, 4,4'-biphénylène diisocyanate, 4,4'-méthylène diphénylisocyanate, 1,5-naphtylène diisocyanate, 1,5-tétrahydronaphtylène diisocyanate et polyméthylène polyphénylisocyanates.

37. Procédé suivant la revendication 34, dans lequel le groupe formant un sel d'acide est introduit dans le prépolymère par un composé contenant des atomes d'hydrogène actifs et des groupes acides actifs neutralisés par une base neutralisante.

38. Procédé suivant la revendication 37, dans lequel le composé contenant des atomes d'hydrogène actifs et des groupes acides actifs est choisi dans le groupe consistant en acides hydroxy et mercapto carboxyliques, acides amino carboxyliques, acides aminohydroxy carboxyliques, acides sulfoniques, acides hydroxy sulfoniques et acides aminosulfoniques.

39. Procédé suivant la revendication 37, dans lequel le composé contenant des atomes d'hydrogène actifs et des groupes acides actifs est l'acide diméthylol propionique et la base neutralisante est une base choisie dans le groupe consistant en hydroxyde de sodium, hydroxyde de potassium, hydroxyde d'ammonium et amines tertiaires.

40. Procédé suivant la revendication 34, dans lequel le groupe formant un sel d'amine est introduit dans le prépolymère par un composé contenant des atomes d'hydrogène actifs et des groupes basiques actifs neutralisés par un acide neutralisant.

41. Procédé suivant la revendication 40, dans lequel le groupe formant un sel d'amine est choisi dans le groupe consistant en amino alcools, diols et triols aliphatiques, cycloaliphatiques, aromatiques et hétérocycliques; amines; diamines; triamines; et amides.

42. Procédé suivant la revendication 40, dans lequel l'acide neutralisant est choisi dans le groupe consistant en acide chlorhydrique, acide acétique, acide phosphorique, acide glycolique et acide lactique.

43. Procédé suivant la revendication 34, dans lequel les étapes (b) et (d) sont effectuées pratiquement simultanément.
